# EUROPÄISCHE PATENTANMELDUNG

(11) **EP 0 756 338 A1**
(43) Veröffentlichungstag der Anmeldung: **29.01.1997**
(21) Anmeldenummer: 96111033.5
(22) Anmeldetag: 09.07.1996
(51) Int. Cl.: H01M 2/12

(54) **Stopfenanordnung zum Verschliessen einzelner Zellenöffnungen eines Akkumulators**

(30) Priorität: 27.07.1995 DE 19527526
(71) Anmelder: HAGEN Batterie AG, D-59494 Soest (DE)
(72) Erfinder: Gürtler, Josef, Dr., 59505 Bad Sassendorf-Weslarn (DE); Wulf, Ulrich, 59494 Soest (DE); Scholz, Detlef, 59494 Soest (DE)
(74) Vertreter: Manitz, Gerhart, Dr.

(57) **Zusammenfassung**

Die Erfindung betrifft eine Stopfenanordnung 1 zum Verschließen einzelner Zellenöffnungen 6 eines Akkumulators 30 mit einem im wesentlichen die Form eines umgekehrten Topfes aufweisenden Stopfenteil 2, dessen Umfangswand 24' eine zur Zellenöffnung 6 passende Außenform besitzt, welcher wenigstens einen das Zelleninnere mit der umgebenden Atmosphäre verbindenden Gasleitungskanal 23; 25 aufweist und in dessen Hohlraum 7 eine von dem Stopfenteil 2 gehaltene Ventilanordnung 4, 5 mit einem mit dem Zelleninneren kommunizierenden Einlaß 9 und einem mit der umgebenden Atmosphäre in Verbindung stehenden Auslaß 10 vorgesehen ist, welche normalerweise geschlossen ist, jedoch bei einem bestimmten Mindestdruck im Zelleninneren derart öffnet, daß zwischen Einlaß 9 und Auslaß 10 eine Strömungsverbindung entsteht. Die Ventilanordnung 4, 5 ist an einem als gesondertes Bauteil ausgebildeten, eine Verbindung zwischen dem Zelleninneren und dem Einlaß 9 der Ventilanordnung 4, 5 herstellenden Einsatz 3 angeordnet bzw. ausgebildet, der separat herstellbar und in den Hohlraum 7 des Stopfenteils 2 dicht einsetzbar ist.

## Beschreibung

Die Erfindung betrifft eine Stopfenanordnung zum Verschließen einzelner Zellenöffnungen eines Akkumulators nach dem Oberbegriff des Anspruchs 1.

Derartige Stopfenanordnungen sind grundsätzlich bekannt und werden insbesondere für Rekombinationsbatterien verwendet. Die vom Stopfenteil gehaltene Ventilanordnung ist in der Regel als Überdruckventil ausgebildet, das einerseits die Verdunstung des Batterieelektrolyten verhindert und andererseits Gase, die beispielsweise bei einer Überladung der Batterie entstehen, beim Erreichen eines bestimmten Überdrucks im Zelleninneren an die umgebende Atmosphäre abführt. Die Ventilanordnung sorgt außerdem dafür, daß kein Sauerstoff von außen in die jeweilige Akkumulatorzelle eindringt.

Bei bekannten Stopfenanordnungen ist die Ventilanordnung häufig an einer einstückig mit dem Stopfenteil ausgebildeten Halterung vorgesehen, so daß das stopfenteil vergleichsweise kompliziert aufgebaut ist.

Da dieses Stopfenteil nur für die jeweils passende Zellenöffnung verwendet werden kann, muß außerdem zur Anpassung an verschiedene Zellenöffnungen durch den erforderlichen Austausch des Stopfenteils im wesentlichen die gesamte Stopfenanordnung ersetzt werden. Daher müssen für verschiedene Zellenöffnungen zahlreiche kompliziert aufgebaute Stopfenteile bereitgehalten werden.

Darüber hinaus ist ein Auswechseln der Ventilanordnung bei derartigen Stopfenanordnungen aufgrund des komplizierten Stopfenteilaufbaus vergleichsweise aufwendig.

Es ist eine Aufgabe der Erfindung, eine einfach aufgebaute und vielseitig einsetzbare Stopfenanordnung zu schaffen.

Diese Aufgabe wird erfindungsgemäß durch die Merkmale im kennzeichnenden Teil des Anspruchs 1 gelöst.

Die erfindungsgemäße Stopfenanordnung umfaßt somit ein Stopfenteil, das in die Zellenöffnung einsetzbar ist, sowie einen gesondert herstellbaren Einsatz mit der Ventilanordnung. Der separate Einsatz kann daher mit unterschiedlichen Stopfenteilen, die an die jeweiligen Zellenöffnungen des betreffenden Akkumulators angepaßt sind, verwendet werden, so daß zur Anpassung der erfindungsgemäßen Stopfenanordnung an verschiedene Akkumulatoren jeweils nur das Stopfenteil ausgetauscht werden braucht, welches innen form- und dimensionsmäßig an den einheitlichen Einsatz und die an ihm vorgesehene Ventilanordnung angepaßt ist.

Das Vorsehen des Ventilelementes als gesondertes Bauteil erlaubt zusätzlich die Verwendung verschiedener Ventilelemente in Verbindung mit dem stets gleichen Einsatz und/oder Stopfenteil, so daß die erfindungsgemäße Stopfenanordnung noch vielseitiger einsetzbar ist, da durch das Auswählen geeigneter Ventilelemente die Ventilstopfenanordnung auf einfache Weise an verschiedene Mindestdrücke, bei denen die Ventilanordnung öffnet, angepaßt werden kann.

Die Ausbildung von Stopfenteil, Einsatz und Ventilelement derart, daß oberhalb der Ventilkappe sowohl ein Filterelement als auch ein Formeinsatz oder ein Blindstopfen angeordnet werden kann, erlaubt bei entsprechender Wahl des Stopfenteils eine Anwendung der erfindungsgemäßen Stopfenanordnung sowohl in dem Fall, in dem die im Zelleninneren entstehenden Gase über die Stopfenanordnung selbst, nämlich durch das Filterelement hindurch und über einen Kanal im Deckel des Stopfenteils, in die umgebende Atmosphäre abgeführt werden, als auch im Fall einer zentralen Abführung dieser Gase durch einen im Akkumulator vorgesehenen zentralen Entgasungskanal, in welchem vorzugsweise ebenfalls ein rückzündungshemmendes Filterelement oder eine Sinterscheibe angeordnet ist.

Die Ausbildung der zur Abdichtung des Stopfenteils gegenüber der Zellenöffnung notwendigen Ringdichtung(en) als einstückig mit dem Stopfenteil ausgebildeter und vorzugsweise bei der Herstellung des Stopfenteils an dieses angespritzter Dichtring verringert die Anzahl der für die erfindungsgemäße Stopfenanordnung benötigten Bauteile.

Die erfindungsgemäße Stopfenanordnung kann auf vorteilhafte Weise unterschiedliche Ventilformen aufweisen. So kann das Ventilelement beispielsweise als Ventilkappe, Ventilschlauch oder Ventilscheibe ausgebildet sein. Mit einem entsprechend ausgestalteten, den Ventilsitz bildenden Einsatz kann die Stopfenanordnung somit an die unterschiedlichsten Einsatzbedingungen angepaßt werden.

Besonders vorteilhaft ist das Vorsehen eines Adapterelementes, das zur Anpassung der erfindungsgemäßen Stopfenanordnung an die jeweils zu verschließende Zellenöffnung in diese einsetzbar ist und eine Normöffnung aufweist, so daß zum Verschließen unterschiedlicher Zellenöffnungen verschiedene Adapterelemente, jedoch nur Stopfenteile mit hinsichtlich der zu verschließenden Normöffnung stets gleichen Abmessungen erforderlich sind.

Weitere Ausführungsformen der Erfindung sind in den Unteransprüchen angegeben.

Die Erfindung wird im folgenden beispielhaft anhand der Zeichnung beschrieben; in dieser zeigt:
- Figur 1: einen Vertikalschnitt durch eine Ausführungsform einer in die Zellenöffnung eines Akkumulators eingesetzten Stopfenanordnung gemäß der Erfindung mit einer eine Ventilkappe aufweisenden Ventilanordnung,
- Figur 2: einen analogen Schnitt durch eine weitere Ausführungsform einer in die Zellenöffnung eines Akkumulators eingesetzten Stopfenanordnung gemäß der Erfindung, welche ebenfalls eine eine Ventilkappe aufweisende Ventilanordnung umfaßt, die
- Figuren 3a, 3b und 3c: verkleinerte Schnittansichten von Stopfenanordnungen nach Figur 1 mit unterschiedlichen Dichtungsanordnungen, die
- Figuren 4a und 4b: verkleinerte Schnittansichten von Stopfenanordnungen nach Figur 2 mit unterschiedlichen Dichtungsanordnungen,
- Figur 5: eine Schnittansicht einer Stopfenanordnung mit einer einen Ventilschlauch aufweisenden Ventilanordnung, die
- Figuren 6a und 6b: Schnittansichten weiterer Stopfenanordnungen mit eine Ventilscheibe aufweisenden Ventilanordnungen, und
- Figur 7: eine Schnittansicht einer eine Ventilanordnung mit Ventilkappe umfassenden Stopfenanordnung, die zusammen mit einem Adapterelement in die Zellenöffnung eines Akkumulators eingesetzt ist.

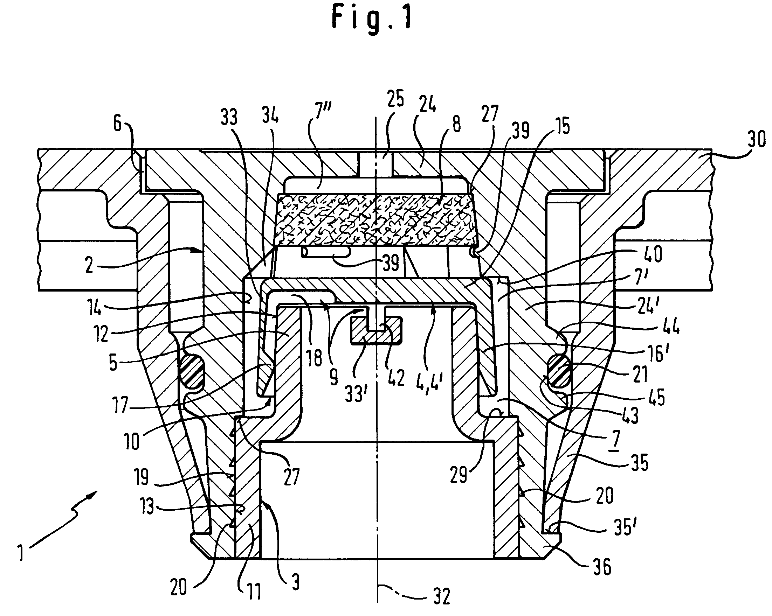

Figur 1 zeigt eine Ausführungsform einer erfindungsgemäßen Stopfenanordnung 1, die in eine Zellenöffnung 6 des Deckels 30 eines Akkumulators eingesetzt ist. Die Stopfenanordnung 1 umfaßt ein Stopfenteil 2, das im wesentlichen die Form eines umgekehrten Topfes kreisförmigen Querschnitts mit einer Umfangswand 24' und einem Deckel 24 aufweist und so einen Hohlraum 7 definiert.

In den Hohlraum 7 des stopfenteils 2 ist von unten ein Einsatz 3 eingesetzt, der aus zwei im wesentlichen zylinderförmigen Bereichen kreisförmigen Querschnitts besteht, nämlich einem unteren Eingriffsbereich 11 und einem als Ventilsitz 5 ausgebildeten oberen Bereich, dessen Außendurchmesser kleiner als derjenige des Eingriffsbereichs 11 ist, so daß zwischen beiden Bereichen eine Ringstufe 29 vorliegt. Der Einsatz 3 ist als einstückiges Bauteil ausgebildet.

Im in das Stopfenteil 2 eingesetzten Zustand befindet sich die Außenwand 13 des Eingriffsbereichs 11 gasdicht mit der dem Eingriffsbereich 11 gegenüberliegenden Innenwand 19 des Stopfenteils 2 in Eingriff. Auf der Eingriffsbereich-Außenwand 13 und/oder der Stopfenteil-Innenwand 19 sind vorzugsweise als in Umfangsrichtung verlaufende Dichtlippen und/oder Ausnehmungen ausgebildete Oberflächenausgestaltungen 20 vorgesehen, die eine einwandfreie Gasdichtheit mit gutem mechanischen Halt zwischen Einsatz 3 und Stopfenteil 2 gewährleisten.

Das Stopfenteil 2 und der Einsatz 3 sind so ausgebildet, daß zwischen der Umfangswand 12 des Ventilsitzes 5 und der Innenwand 14 des Stopfenteils 2 ein radialer Zwischenraum 7' vorhanden ist. In der in Figur 1 gezeigten Ausführungsform wird dies dadurch erreicht, daß der Außendurchmesser des Ventilsitzes 5 wesentlich kleiner als derjenige des Eingriffsbereiches 11 und der Innendurchmesser des Stopfenteils 2 im Bereich des Ventilsitzes 5 nur geringfügig kleiner ist als derjenige des Stopfenteils 2 im Eingriffsbereich 11.

Auf diese Weise wird zum einen der gewünschte Radialabstand zwischen Ventilsitz 5 und Innenwand 14 des Stopfenteils 2 erzielt und zum anderen ein zumindest bereichsweise in Umfangsrichtung verlaufender Ringanschlag 27 des Stopfenteils 2 geschaffen, an dem die Ringstufe 29 des Einsatzes 3 am Übergang vom Eingriffsbereich 11 in den Ventilsitz 5 im in das Stopfenteil 2 eingesetzten Zustand des Einsatzes 3 anliegt. Der Anschlag 27 und die Ringstufe 29 definieren somit die korrekte Einsetzposition des Einsatzes 3 in dem Stopfenteil 2 und erleichtern auf diese Weise den Zusammenbau der erfindungsgemäßen Stopfenanordnung 1.

Eine elastische Ventilkappe 4', die oben einen horizontalen Ventildeckel 15 und darunter eine hohlzylindrische Umfangswand 16 aufweist, ist hutartig dicht auf den Ventilsitz 5 des Einsatzes 3 aufgesetzt, so daß Ventilkappe 4' und Ventilsitz 5 eine Ventilanordnung bilden.

An der Innenseite der Ventilkappe 4' ist eine sich zumindest bereichsweise in Umfangsrichtung erstreckende Ausnehmung 18 vorgesehen, die sich teilweise in der Umfangswand 16 im Übergangsbereich von der Umfangswand 16 zum Ventildeckel 15 und teilweise im Ventildeckel 15 befindet und durch die an der Umfangswand 16 der Ventilkappe 4' ein Bereich reduzierter Wandstärke 33 und eine mit dem Ventilsitz 5 zusammenarbeitende Dichtlippe 17 entsteht. Die Ausnehmung 18 kommuniziert mit dem Innenraum des Einsatzes 3 und somit dem Zelleninneren und bildet daher den Einlaß 9 der Ventilanordnung 4', 5. Die Dichtlippe 17 dichtet die Ausnehmung 18 gegenüber dem Hohlraum 7 des Stopfenteils 2 ab und bildet auf diese Weise den in Figur 1 geschlossenen Auslaß 10 der Ventilanordnung 4', 5.

Im Ventilsitz 5 ist des weiteren wenigstens eine Ausnehmung 42 vorgesehen, die als im wesentlichen parallel zur Achse 32 der Stopfenanordnung 1 verlaufender Schlitz ausgebildet ist. Außerdem ist im Ventilsitz 5 ein an die Ausnehmung 42 angrenzender Bereich 33' reduzierter Wandstärke ausgebildet, der in Figur 1 schematisch als die Ausnehmung 42 seitlich und unten umgebender schraffierter Bereich angedeutet ist.

Durch den Bereich 33' reduzierter Wandstärke in der Umgebung der Ausnehmung 42 entsteht zwischen der Umfangswand 16 der Ventilkappe 4' und dem Ventilsitz 5 ein Hohlraum, der über die Ausnehmung 42 mit dem Innenraum des Einsatzes 3 kommuniziert und auf diese Weise eine Strömungsverbindung zwischen dem Innenraum des Einsatzes 3 und der Dichtlippe 17 herstellt.

Die Ausnehmung 18 und der Bereich 33' reduzierter Wandstärke in Verbindung mit der wenigstens einen Ausnehmung 42 stellen Alternativen dar, die einzeln oder auch gemeinsam den Einlaß 9 der Ventilanordnung 4', 5 bilden können.

In Figur 1 ist die Ventilanordnung 4', 5 im geschlossenen Zustand gezeigt. Bei einem bestimmten Mindestdruck im Zelleninneren kann sich die Ventilkappe 4' zumindest in dem Bereich reduzierter Wandstärke 33 und/oder 33' elastisch derart verformen, daß der entsprechende Teil der Ventilkappen-Seitenwand 16 elastisch von dem Ventilsitz 5 weggedrückt wird. Auf diese Weise wird die Dichtlippe 17 außer Eingriff mit dem Ventilsitz 5 gebracht und die Ventilanordnung 4', 5 öffnet.

Die Innenwand 14 des Stopfenteils 2 in dem Bereich von dem Anschlag 27 bis etwa zur Oberseite des Ventildeckels 15 bei zusammengesetzter Stopfenanordnung 1 verläuft im wesentlichen parallel zur Vertikalmittelachse 32. Wie in Figur 1 rechts von der Vertikalmittelachse 32 gezeigt ist, springt etwa auf der Höhe der Ventildeckel-Oberseite die Innenwand 14 in Umfangsrichtung bereichsweise radial nach innen vor, so daß ein Vorsprung 40 entsteht, an dem von unten der Ventildeckel 15 mit seinem Umfangsrand anliegen kann. Oberhalb des Vorsprungs 40 bis zum Stopfendeckel 24 verjüngt sich die Innenwand 14 etwas.

Über einen gewissen Umfangsbereich springt die Innenwand 14 jedoch nicht wie beim Vorsprung 40 vor, sondern ist nur vorzugsweise um etwa 45° zur Vertikalmittelachse 32 geneigt, so daß ein Kanal 34 entsteht, der den Auslaß 10 der Ventilanordnung 4', 5 mit dem oberen Bereich 7'' des Hohlraums 7 verbindet.

Über der Ventilkappe 4' ist im oberen Bereich 7'' des Hohlraums 7 ein Filterelement 8 angeordnet, welches den gesamten Querschnitt des Bereichs 7'' überdeckt. Das Filterelement 8 liegt oben an einem Ringanschlag 27' an und wird unten durch Rastwülste 39 gehalten, die als radiale Erweiterungen an der Innenwand 14 des Stopfenteils 2 ausgebildet sind und in komplementäre Ausnehmungen im Filterelement 8 eingreifen.

Oberhalb des Filterelements 8 setzt sich der Bereich 7'' des Hohlraums 7 noch etwas fort und endet schließlich am Stopfendeckel 24, in dem ein kurzer Gasleitungskanal 25 vorgesehen ist, der in die umgebende Atmosphäre mündet.

Das Filterelement 8 trennt das Zelleninnere von der Außenatmosphäre und dient zur Vermeidung von Rückzündungen entweichender Gase in das Zelleninnere, wobei es bevorzugt als Fritte ausgebildet ist.

Bei geöffneter Ventilanordnung 4', 5 besteht somit ein Strömungsweg vom Zelleninneren über den Einlaß 9, die Ausnehmung 18 und/oder den Hohlraum im Bereich 33' reduzierter Wandstärke in der Umgebung der Ausnehmung 42, den Auslaß 10, den Zwischenraum 7', den Kanal 34, das Filterelement 8 und den Kanal 25 in die umgebende Atmosphäre.

Die Zellenöffnung 6 ist nach Figur 1 an einem zu dem Akkumulator bzw. dem Akkumulatordeckel 30 gehörenden und in das Zelleninnere hineinragenden, im wesentlichen hohlzylindrischen und sich zumindest in seinem Endbereich verengenden Stutzen 35 ausgebildet.

Das Stopfenteil 2 ist an seinem unteren Ende mit einem radial nach außen weisenden Ringvorsprung 36 versehen, dessen Außendurchmesser größer als der Innendurchmesser des unteren Endes des Stutzens 35 ist und welcher unter die untere Stirnfläche 35' des Stutzens 35 greift und auf diese Weise die Stopfenanordnung 1 in der Zellenöffnung 6 festhält.

Das Material des Stutzens 35, seine Wandstärke im unteren Endbereich und das Material der Umfangswand 24' des Stopfenteils 2 sollen so beschaffen sein, daß das Einsetzen des Stopfenteils 2 von oben in den Stutzen 35 unter elastischer Verformung des unteren Endbereiches des Stutzens 35 und/oder der Umfangswand 24' des Stopfenteils 2 in die Position nach Figur 1 möglich ist.

Zur Abdichtung des Spaltes zwischen dem Stopfenteil 2 und dem Stutzen 35 ist zwischen der Umfangswand 24' und der Innenwand des Stutzens 35 eine Ringdichtung 21 vorgesehen.

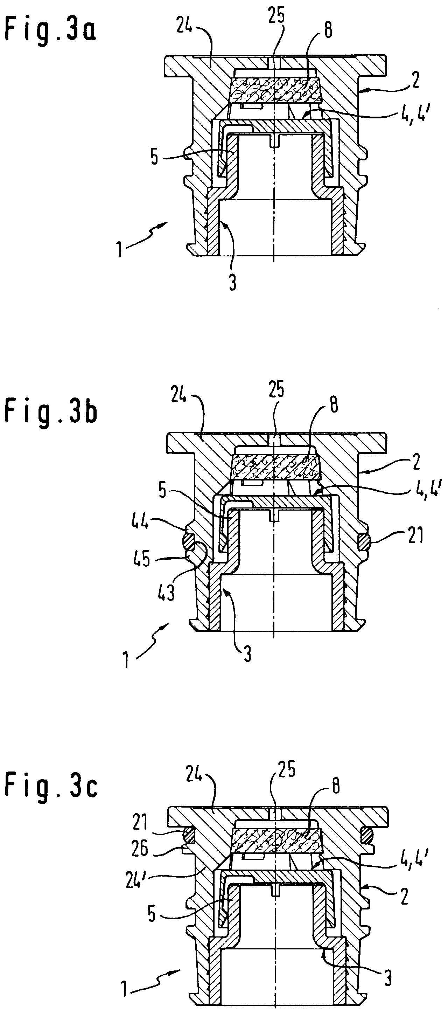

Nach den Figuren 1 und 3b ist diese Ringdichtung 21 als O-Ring ausgebildet, der in eine zwischen zwei an der Umfangswand 24' ausgebildeten, sich in Umfangsrichtung erstreckenden Wülsten 44, 45 ausgebildete Nut 43 aufgenommen ist. Es ist auch möglich, die Ringdichtung 21 einstückig mit dem Stopfenteil 2 als analog den Wülsten 44, 45 an das Stopfenteil 2 angespritzten Dichtring auszubilden, dessen Material und Struktur an die Dichtungsaufgabe angepaßt sind.

Alternativ oder zusätzlich kann das Stopfenteil 2 vorzugsweise im Bereich des Stopfendeckels 24 mit dem Deckel 30 des Akkumulators durch eine in Figur 1 nicht gezeigte, gasdichte Ultraschall-Schweißung verbunden werden.

Die Stopfenanordnung 1 nach Figur 1 besteht somit lediglich aus vier Elementen, nämlich dem Stopfenteil 2, dem Einsatz 3, der Ventilkappe 4' und dem Filterelement 8.

Die Bauteile der anhand von Figur 1 beschriebenen Stopfenanordnung 1 weisen einen zur vertikalen Mittelachse 32 konzentrischen kreisförmigen Querschnitt auf. Grundsätzlich sind jedoch auch andere Querschnittsformen, z.B oval, quadratisch, etc., möglich.

In den folgenden Figuren bezeichnen gleiche Bezugszahlen entsprechende Bauelemente wie in Figur 1.

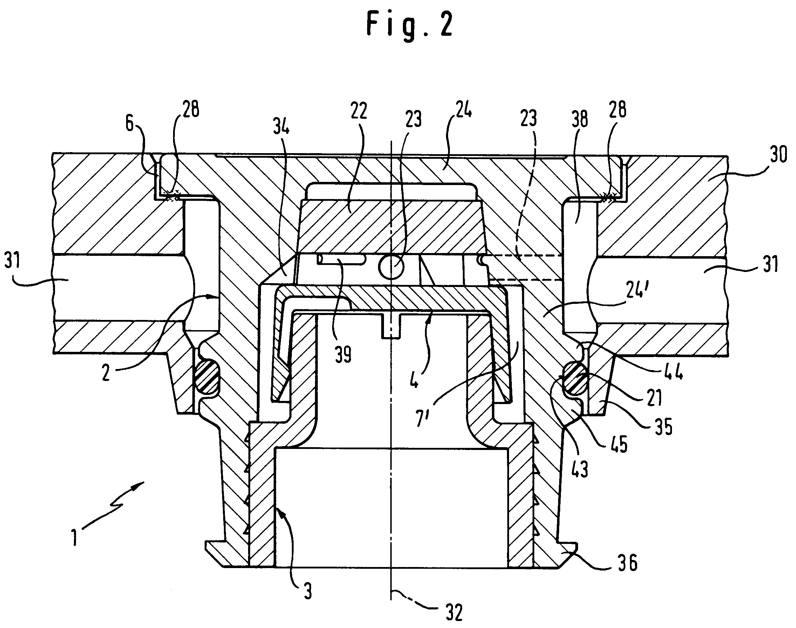

Während bei der in Figur 1 gezeigten Ausführungsform die Abgabe der im Zelleninneren entstehenden Gase durch den Gasleitungskanal 25 hindurch direkt in die Atmosphäre erfolgt, werden bei der in Figur 2 gezeigten Ausführungsform die im Zelleninneren entstehenden Gase durch das Stopfenteil 2 zunächst zu einem im Deckel 30 des Akkumulators ausgebildeten horizontalen Zentralkanal 31 geleitet, welcher seinerseits in die umgebende Atmosphäre mündet.

Im Zentralkanal 31 ist vorzugsweise ein in Figur 2 nicht dargestelltes rückzündungshemmendes Filterelement oder eine Sinterscheibe angeordnet, das oder die wie das in Figur 1 gezeigte und zur Stopfenanordnung 1 gehörende Filterelement 8 zur Vermeidung von Rückzündungen entweichender Gase in das Zelleninnere vorgesehen ist.

Hierzu ist anstelle des Filterelementes 8 nach Figur 1 ein Blindstopfen 22 vorgesehen. Von dem Raum unter dem Blindstopfen zweigen ein oder mehrere als Querkanäle ausgebildete Entgasungskanäle 23 ab, die in eine Ringkammer 38 zwischen der Umfangswand 24' des Stopfenteils 2 und dem Stutzen 35 münden. Radial außen an die Ringkammer 38 sind die beiden zum betreffenden Stopfenteil 2 führenden Teile des Zentralkanals 31 angeschlossen.

Die Ringdichtung 21 ist unterhalb des Zentralkanals 31 angeordnet und arbeitet mit einem gegenüber Figur 1 stark verkürzten Stutzen 35 zusammen. Die Halterung des Stopfenteils 2 wird nach Figur 2 nicht durch Zusammenwirkung des radialen Ringvorsprungs 36 und des Stutzens 35, sondern dadurch erzielt, daß der Stopfendeckel 24 durch eine Schweißung, insbesondere eine Ultraschall-Schweißung 28 mit dem Deckel 30 dicht verbunden ist.

Nach Figur 3a braucht am Stopfenteil 2 keine Ringdichtung vorgesehen sein. Die Abdichtung gegenüber dem nicht dargestellten Deckel 30 des Akkumulators erfolgt vielmehr durch Verschweißen des Stopfendeckels 24 mit dem Deckel 30.

Figur 3b zeigt die Abdichtung mittels einer Ringdichtung 21, wie sie beim Ausführungsbeispiel nach Figur 1 vorgesehen ist.

Bei der Ausführung nach Figur 3c ist die Ringdichtung 21 unter dem Stopfendeckel 24 angeordnet und wird direkt durch einen darunter an der Umfangswand 24' vorgesehenen Ringwulst 26 gehalten.

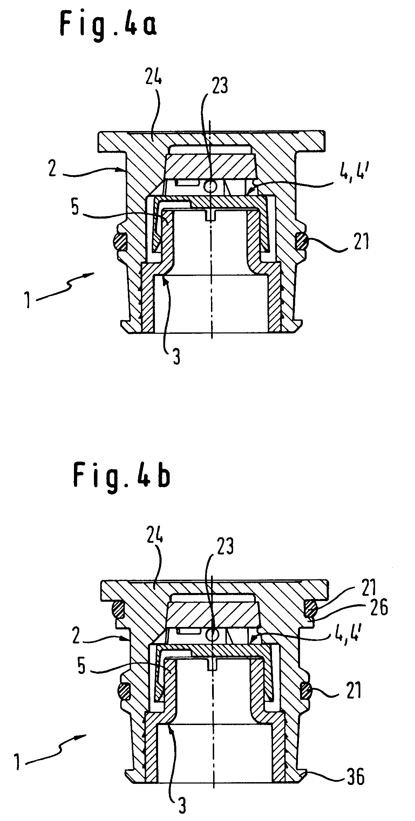

In den Figuren 4a und 4b sind Stopfenanordnungen 1, die im Fall der Entgasung über einen nicht dargestellten, zentralen Akkumulatorkanal verwendet werden, sowie die entsprechenden Abdichtungsmöglichkeiten gegenüber der ebenfalls nicht gezeigten Zellenöffnung dargestellt.

Figur 4a zeigt in verkleinertem Maßstab die Ausführungsform nach Figur 2.

Nach Figur 4b ist die Verschweißung des Stopfenteils 2 mit dem Deckel 30 des Akkumulators durch eine weitere Ringdichtung 21 ersetzt, die entsprechend der Ausführungsform von Figur 3c zwischen dem Stopfendeckel 24 und dem Ringwulst 26 angeordnet ist. Wegen des Verzichts auf die Schweißung muß jedoch der Stutzen 35 eine Länge wie in Figur 1 haben und von dem Ringvorsprung 36 hintergriffen werden.

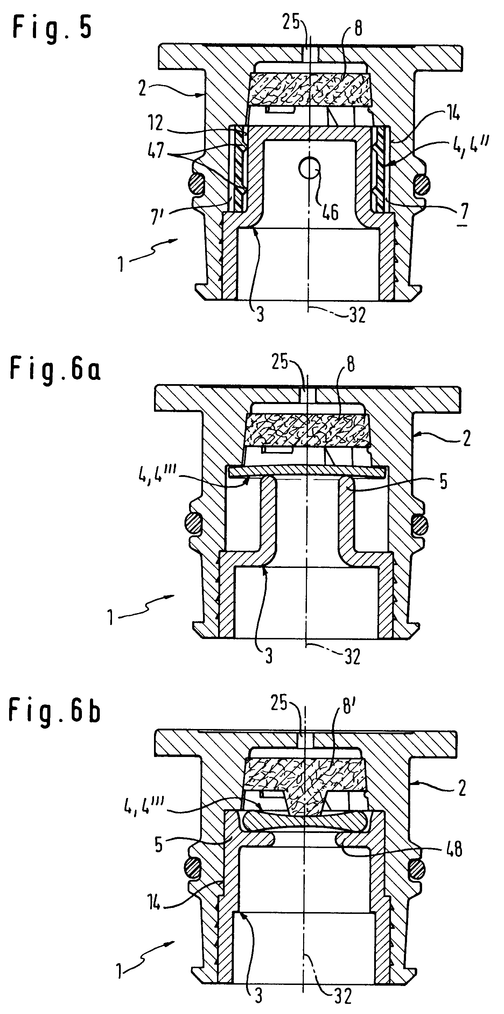

Figur 5 zeigt eine weitere Stopfenanordnung 1 nach Figur 1, die jedoch eine andere Ventilanordnung 4'', 5 aufweist. Hier ist der Einsatz 3 an seinem den Ventilsitz 5 bildenden Ende geschlossen und als das Ventilelement 4 ein dicht auf den Ventilsitz 5 geschobener Ventilschlauch 4'' vorgesehen, der an seiner Innenseite mit zwei sich in Umfangsrichtung erstreckenden und in Richtung der Achse 32 der Stopfenanordnung 1 beabstandeten Dichtlippen 47 versehen ist, durch die der Ventilschlauch 4'' mit dem Ventilsitz 5 zusammenwirkt.

In der Umfangswand 12 des Ventilsitzes 5 ist wenigstens eine Öffnung 46 vorgesehen, die mit dem durch die Dichtlippen 47 zwischen dem Ventilschlauch 4''' und dem Ventilsitz 5 gebildeten Hohlraum kommuniziert und somit die Strömungsverbindung zwischen dem Innenraum des Einsatzes 3 und den mit der Umfangswand 12 des Ventilsitzes 5 zusammenarbeitenden Dichtlippen 47 des Ventilschlauches 4'' herstellt.

In den Figuren 6a und 6b sind weitere Stopfenanordnungen 1 nach Figur 1 mit unterschiedlichen Ventilanordnungen 4''', 5 dargestellt, deren Ventilelement 4 jeweils als vorzugsweise kreisförmige Ventilscheibe 4''' ausgebildet und auf den Einsatz 3 an dessen als Ventilsitz 5 ausgebildeten Bereich aufgelegt ist und den Einsatz 3 in diesem Bereich dicht verschließt.

In der Ausführungsform nach Figur 6a ist der Ventilsitz 5 als im wesentlichen gerader Hohlzylinder mit vorzugsweise kreisförmigem Querschnitt ausgebildet, auf dessen Stirnfläche die Ventilscheibe 4''' aufliegt, wobei der Durchmesser der Ventilscheibe 4''' bevorzugt deutlich größer als derjenige des Ventilsitzes 5 und kleiner als der Innendurchmesser des Stopfenteils 2 in diesem Bereich ist.

Nach Figur 6b ist der Außendurchmesser des den Ventilsitz 5 bildenden Ventilbereiches so bemessen, daß er eng an der Innenwand 14 des Stopfenteils 2 anliegt. Auch in dieser Ausführungsform ist der Ventilsitz 5 im wesentlichen als gerader Hohlzylinder ausgebildet, wobei er jedoch einen radial nach innen vorstehenden und sich in Umfangsrichtung erstreckenden Ringvorsprung 48 aufweist, auf welchem die Ventilscheibe 4''' aufliegt.

In der in Figur 6b gezeigten Ausführungsform wird ein anderes Filterelement 8' verwendet, das an die einen etwa knochenförmigen Querschnitt, im zentralen Bereich eine geringere Dicke aufweisende Ventilscheibe 4''' angepaßt ist.

Ab einem bestimmten Mindestdruck im Zelleninneren gelangen bei den Stopfenanordnungen 1 nach den Figuren 6a, b die Ventilscheiben 4''' außer Eingriff mit der Stirnfläche des Einsatzes 3 bzw. dem Ringvorsprung 48 und die Ventilanordnung 4''', 5 öffnet.

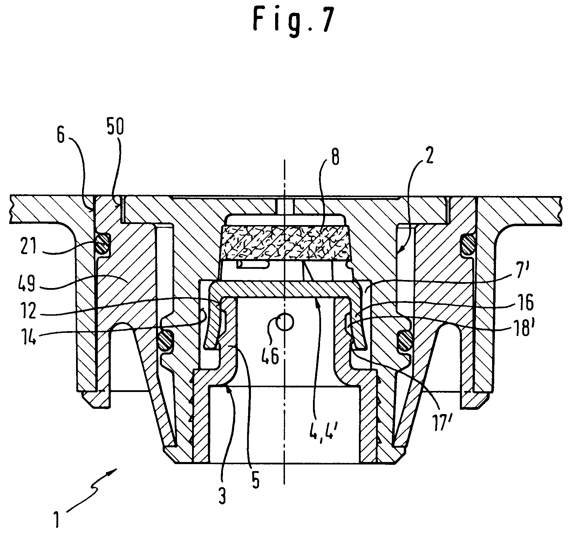

Figur 7 zeigt eine weitere Stopfenanordnung 1 nach Figur 1, die in die Zellenöffnung 6 mit Hilfe eines Adapterelementes 49 eingesetzt ist, wobei das Zusammenwirken von Stopfenteil 2 und Adapterelement 49 entsprechend dem Zusammenwirken von Stopfenteil 2 und Zellenöffnung 6 bei der Ausführungsform nach Figur 1 geschehen kann.

Das Adapterelement 49 dient zur Anpassung der Stopfenanordnung 1 an unterschiedliche Zellenöffnungen 6 und kann in die Zellenöffnung 6 dicht durch beispielsweise Einschrauben, Einstecken oder Einrenken eingesetzt werden, wobei es mit einer Ringdichtung 21 versehen ist, die einstückig mit dem Adapterelement 49 oder als an das Adapterelement 49 angespritzter Wulst ausgebildet ist.

Im Adapterelement 49 ist eine Normöffnung 50 ausgebildet, so daß zum Verschließen unterschiedlicher Zellenöffnungen 6 auf vorteilhafte Weise verschiedene Adapterelemente 49 mit identischen Normöffnungen 50 verwendet werden, jedoch nur Stopfenteile 2 mit hinsichtlich der von ihnen jeweils zu verschließenden Normöffnung 50 stets gleichen Abmessungen erforderlich sind.

Figur 7 zeigt außerdem eine alternative Möglichkeit zur Ausbildung der aus Ventilkappe 4' und Ventilsitz 5 bestehenden Ventilanordnung 4', 5, die darin besteht, daß die Ventilkappe 4' keine Ausnehmung aufweist und statt dessen der Ventilsitz 5 auf seiner Außenseite mit einer umlaufenden Ausnehmung 18' und wenigstens einer Öffnung 46 versehen ist, über die eine Strömungsverbindung zwischen dem Innenraum des Einsatzes 3 und einer auf der Außenseite des Ventilsitzes 5 ausgebildeten, mit der Umfangswand 16 der Ventilkappe 4' zusammenarbeitenden Dichtlippe 17' hergestellt wird.

Der Zusammenbau der erfindungsgemäßen Stopfenanordnung 1 geht wie folgt vor sich:

Zunächst wird das Filterelement 8 bzw. der Blindstopfen 22 in das Stopfenteil 2 eingesetzt, wobei es bzw. er axial durch die Rastwülste 39 gehalten wird.

Anschließend wird der Einsatz 3 mit daran angeordnetem Ventilelement 4 in das Stopfenteil 2 eingedrückt, bis die Ringstufe 29 des Einsatzes 3 an den Anschlag 27 und/oder die Oberseite des Ventildeckels 15 an den Vorsprung 40 stößt. Aufgrund geeigneter Dimensionierung und der Oberflächenausgestaltungen 20 wird der Einsatz 3 hierbei festklemmend mit dem Stopfenteil 2 verbunden.

Die Stopfenanordnung 1 ist nunmehr gebrauchsfertig und kann in die Öffnung 6 einer Akkumulatorzelle bzw. in die Normöffnung 50 eines in der Zellenöffnung 6 angeordneten Adapterelementes 49 eingesetzt werden, wo entweder die widerhakenartige Fixierung nach Figur 1 oder die Verschweißung nach Figur 2 erfolgt.

Erreicht und übersteigt anschließend der Gasdruck im Zelleninneren beispielsweise aufgrund einer Überladung des Akkumulators einen bestimmten Mindestdruck, so wird das jeweilige Ventilelement 4 außer Eingriff mit dem Ventilsitz 5 gebracht und die im Zelleninneren entstehenden Gase gelangen über den Innenraum des Einsatzes 3 durch die nun offene Ventilanordnung 4, 5 nach außen.

Wenn sich der Druck im Zelleninneren ausreichend weit abgebaut hat, schließt die Ventilanordnung 4, 5 wieder und das Zelleninnere ist gegenüber der umgebenden Atmosphäre abgedichtet.

### Bezugszeichenliste

- 1: Stopfenanordnung
- 2: Stopfenteil
- 3: Einsatz
- 4: Ventilelement
- 4': Ventilkappe
- 4'': Ventilschlauch
- 4''': Ventilscheibe
- 5: Ventilsitz
- 6: Zellenöffnung
- 7: Hohlraum
- 7': Zwischenraum
- 7'': oberer Bereich des Hohlraums
- 8, 8': Filterelement
- 9: Einlaß
- 10: Auslaß
- 11: Eingriffsbereich
- 12: Umfangswand des Ventilsitzes
- 13: Außenwand des Eingriffsbereichs
- 14: Stopfenteil-Innenwand gegenüber Ventilsitz
- 15: Ventildeckel
- 16: Umfangswand der Ventilkappe
- 17, 17': Dichtlippe
- 18, 18': Ausnehmung
- 19: Stopfenteil-Innenwand gegenüber Eingriffsbereich
- 20: Oberflächenausgestaltungen
- 21: Ringdichtung
- 22: Blindstopfen
- 23: Entgasungskanal
- 24: Stopfendeckel
- 24': Umfangswand des Stopfenteils
- 25: Gasleitungskanal
- 26: Ringwulst
- 27: Ringanschlag
- 27': Ringanschlag
- 28: Schweißung
- 29: Ringstufe
- 30: Deckel des Akkumulators
- 31: Zentralkanal
- 32: Achse
- 33, 33': Bereiche reduzierter Wandstärke
- 34: Kanal
- 35: Stutzen der Zellenöffnung
- 35': untere Stirnfläche des Stutzens
- 36: Ringvorsprung
- 38: Ringkammer
- 39: Rastwülste
- 40: Vorsprung
- 42: Ausnehmung
- 43: Nut
- 44: Wulst
- 45: Wulst
- 46: Öffnung im Ventilsitz
- 47: Dichtlippen des Ventilschlauches
- 48: Ringvorsprung
- 49: Adapterelement
- 50: Normöffnung

## Patentansprüche

1. Stopfenanordnung (1) zum Verschließen einzelner Zellenöffnungen (6) eines Akkumulators (30) mit einem im wesentlichen die Form eines umgekehrten Topfes aufweisenden Stopfenteil (2), dessen Umfangswand (24') eine zur Zellenöffnung (6) passende Außenform besitzt, welcher wenigstens einen das Zelleninnere mit der umgebenden Atmosphäre verbindenden Gasleitungskanal (23; 25) aufweist und in dessen Hohlraum (7) eine von dem Stopfenteil (2) gehaltene Ventilanordnung (4, 5) mit einem mit dem Zelleninneren kommunizierenden Einlaß (9) und einem mit der umgebenden Atmosphäre in Verbindung stehenden Auslaß (10) vorgesehen ist, welche normalerweise geschlossen ist, jedoch bei einem bestimmten Mindestdruck im Zelleninneren derart öffnet, daß zwischen Einlaß (9) und Auslaß (10) eine Strömungsverbindung entsteht,
dadurch **gekennzeichnet,**
daß die Ventilanordnung (4, 5) an einem als gesondertes Bauteil ausgebildeten, eine Verbindung zwischen dem Zelleninneren und dem Einlaß (9) der Ventilanordnung (4, 5) herstellenden Einsatz (3) angeordnet bzw. ausgebildet ist, der separat herstellbar und in den Hohlraum (7) des Stopfenteils (2) dicht einsetzbar ist.

2. Stopfenanordnung nach Anspruch 1,
dadurch **gekennzeichnet,**
daß die Ventilanordnung (4, 5) aus einem im wesentlichen hohlzylindrischen Ventilsitz (5) und einem dicht mit dem Ventilsitz (5) zusammenwirkenden Ventilelement (4) besteht, wobei der Ventilsitz (5) und das Ventilelement (4) ab dem bestimmten Mindestdruck derart elastisch voneinander wegdrückbar sind, daß die Ventilanordnung (4, 5) öffnet, und/oder daß der Ventilsitz (5) am Einsatz (3) und das Ventilelement (4) als ein gesondertes Bauteil ausgebildet ist.

3. Stopfenanordnung nach einem der vorhergehenden Ansprüche,
dadurch **gekennzeichnet,**
daß der Einsatz (3) im wesentlichen als ein aufrecht stehender Hohlzylinder mit vertikaler Achse und vorzugsweise kreisförmigem Querschnitt sowie einem unteren Eingriffsbereich (11) zur Befestigung des Einsatzes (3) in dem Stopfenteil (2) und einem darüber befindlichen, insbesondere durch den Ventilsitz (5) gebildeten Ventilbereich ausgebildet ist und/oder daß der Einsatz (3) als einstückiges Bauteil ausgebildet ist.

4. Stopfenanordnung nach Anspruch 2 oder 3,
dadurch **gekennzeichnet,**
daß als das Ventilelement (4) eine Ventilkappe (4') vorgesehen ist, die als ein an einem Ende durch einen Ventildeckel (15) geschlossener Hohlzylinder ausgebildet ist, dessen Umfangswand (16) den Ventilsitz (5) dicht umfaßt, wobei insbesondere auf der Innenseite der Ventilkappe (4') wenigstens eine Ausnehmung (18) vorgesehen ist, welche eine Strömungsverbindung zwischen dem Innenraum des Einsatzes (3) und wenigstens einer an der Ventilkappe (4') vorgesehenen, mit der Umfangswand (12) des Ventilsitzes (5) zusammenarbeitenden Dichtlippe (17) herstellt.

5. Stopfenanordnung nach Anspruch 4,
dadurch **gekennzeichnet,**
daß der Einsatz (3) an seinem den Ventilsitz (5) bildenden Ende mit wenigstens einer, vorzugsweise als parallel zur Achse (32) der Stopfenanordnung (1) verlaufender Schlitz ausgebildeten Ausnehmung (42) versehen ist und einen an die Ausnehmung (42) angrenzenden Bereich (33') reduzierter Wandstärke aufweist derart, daß die Ausnehmung (42) und der durch den Bereich (33') reduzierter Wandstärke gebildete Hohlraum zwischen dem Ventilsitz (5) und der Ventilkappe (4') eine Strömungsverbindung zwischen dem Innenraum des Einsatzes (3) und wenistens einer an der Ventilkappe (4') vorgesehenen, mit der Umfangswand (12) des Ventilsitzes (5) zusammenarbeitenden Dichtlippe (17) herstellt, wobei insbesondere auf der Außenseite des Ventilsitzes (5) wenigstens eine, vorzugsweise umlaufende Ausnehmung (18') und im Ventilsitz (5) wenigstens eine Öffnung (46) vorgesehen ist, die eine Strömungsverbindung zwischen dem Innenraum des Einsatzes (3) und wenigstens einer auf der Außenseite des Ventilsitzes (5) vorgesehenen, mit der Umfangswand (16) der Ventilkappe (4') zusammenarbeitenden Dichtlippe (17') herstellen.

6. Stopfenanordnung nach Anspruch 2 oder 3,
dadurch **gekennzeichnet,**
daß der Einsatz (3) an seinem den Ventilsitz (5) bildenden Ende geschlossen, als das Ventilelement (4) ein dicht auf den Ventilsitz (5) geschobener Ventilschlauch (4'') und im Ventilsitz (5) wenigstens eine Öffnung (46) vorgesehen ist, welche eine Strömungsverbindung zwischen dem Innenraum des Einsatzes (3) und dem mit der Umfangswand (12) des Ventilsitzes (5) zusammenarbeitenden Ventilschlauch (4'') herstellt, wobei insbesondere auf der Innenseite des Ventilschlauches (4'') wenigstens eine den Ventilsitz (5) dicht umfassende Dichtlippe (47) vorgesehen ist.

7. Stopfenanordnung nach einem der Ansprüche 4 bis 6,
dadurch **gekennzeichnet,**
daß die mit der Dichtlippe (17; 17'; 47) der Ventilkappe (4') bzw. des Ventilschlauches (4'') zusammenarbeitende Umfangswand (12) des Ventilsitzes (5) einen solchen radialen Abstand zur Innenwand (14) des Stopfenteils (2) aufweist, daß die Umfangswand (16) der Ventilkappe (4') bzw. der Ventilschlauch (4'') in dem so gebildeten ringförmigen Zwischenraum (7') Platz hat und sich zur Öffnung der Ventilanordnung (4, 5) radial ausdehnen kann.

8. Stopfenanordnung nach Anspruch 2 oder 3,
dadurch **gekennzeichnet,**
daß als das Ventilelement (4) eine Ventilscheibe (4''') vorgesehen ist, die auf den Einsatz (3) an dessen als Ventilsitz (5) ausgebildeten Bereich aufgelegt ist und den Einsatz (3) in diesem Bereich dicht verschließt, wobei vorzugsweise der Ventilsitz (5) im wesentlichen als gerader Hohlzylinder vorzugsweise im wesentlichen kreisförmigen Querschnitts ausgebildet ist, auf dessen Stirnfläche die bevorzugt ebenfalls im wesentlichen kreisförmige Ventilscheibe (4''') aufliegt, wobei vorzugsweise der Durchmesser der radial gegenüber dem Ventilsitz (5) liegenden Innenwand (14) des Stopfenteils (2) größer als der Außendurchmesser des Ventilsitzes (5) ist und die Ventilscheibe (4''') in radialer Richtung über den Ventilsitz (5) hinausragt oder wobei bevorzugt der Ventilsitz (5) im wesentlichen als gerader Hohlzylinder kreisförmigen Querschnitts mit einem in seinem Endbereich vorgesehenen, radial nach innen vorstehenden und sich in Umfangsrichtung erstreckenden Ringvorsprung (48) ausgebildet ist, auf welchem die Ventilscheibe (4''') aufliegt.

9. Stopfenanordnung nach einem der Ansprüche 3 bis 8,
dadurch **gekennzeichnet,**
daß sich im in das Stopfenteil (2) eingesetzten Zustand des Einsatzes (3) die Außenwand (13) des Eingriffsbereiches (11) gasdicht mit der Innenwand (19) des Stopfenteils (2) in Eingriff befindet und/oder daß der Eingriffsbereich (11) einen größeren Durchmesser als der insbesondere durch den Ventilsitz (5) gebildete Ventilbereich aufweist und/oder daß die radial gegenüber der Außenwand (13) des Eingriffsbereiches (11) liegende Innenwand (19) des Stopfenteils (2) einen größeren Durchmesser als die radial gegenüber dem Ventilsitz (5) liegende Innenwand (14) aufweist und/oder daß die dem Eingriffsbereich (11) radial gegenüberliegende Innenwand (19) des Stopfenteils (2) und/oder die Außenwand (13) des Eingriffsbereiches (11) mit den axialen Halt und eine einwandfreie Abdichtung des Einsatzes (3) gegenüber dem Stopfenteil (2) gewährleistenden Oberflächenausgestaltungen (20) versehen sind und/oder daß im Stopfenteil (2) oberhalb der Ventilanordnung (4, 5) wenigstens ein Kanal (25) zur umgebenden Atmosphäre vorgesehen ist, wobei insbesondere zwischen der Ventilanordnung (4, 5) und dem Kanal (25) zur Vermeidung von Rückzündungen entweichender Gase in das Zelleninnere ein als gesondertes Bauteil ausgebildetes Filterelement (8; 8') angeordnet ist.

10. Stopfenanordnung nach einem der Ansprüche 1 bis 9,
dadurch **gekennzeichnet,**
daß die Stopfenanordnung (1) so ausgebildet ist, daß im Zelleninneren entstehende Gase über einen zentralen Akkumulatorkanal (31) in die umgebende Atmosphäre abführbar sind, wobei vorzugsweise im zentralen Akkumulatorkanal (31) zur Vermeidung von Rückzündungen entweichender Gase in das Zelleninnere ein Filterelement oder eine Sinterscheibe angeordnet ist, und daß insbesondere oberhalb der Ventilanordnung (4, 5) ein wenigstens einen Kanal (23) enthaltendes Gasumleitungsglied (22) angeordnet ist, das zwischen dem Auslaß (10) der Ventilanordnung (4, 5) und dem zentralen Akkumulatorkanal (31) eine Strömungsverbindung herstellt, und/oder daß das Stopfenteil (2) zur Abdichtung des Zelleninneren gegenüber der umgebenden Atmosphäre mit wenigstens einer Ringdichtung (21, 26) versehen und/oder so ausgebildet ist, daß es mit dem Akkumulator (30) insbesondere durch eine Ultraschall-Schweißung (28) im Bereich des Stopfendeckels (24) verschweißbar ist, und/oder daß die wenigstens eine Ringdichtung (21, 26) einstückig mit dem Stopfenteil (2) und vorzugsweise als an das Stopfenteil (2) angespritzter Dichtring ausgebildet ist und/oder daß zur Anpassung der Stopfenanordnung (1) an unterschiedliche Zellenöffnungen (6) ein dicht in die jeweilige Zellenöffnung (6) einsetzbares Adapterelement (49) vorgesehen ist, welches eine durch das Stopfenteil (2) der Stopfenanordnung (1) dicht verschließbare Normöffnung (50) aufweist derart, daß zum Verschließen unterschiedlicher Zellenöffnungen (6) verschiedene Adapterelemente (49), jedoch nur Stopfenteile (2) mit hinsichtlich der zu verschließenden Normöffnung (50) stets gleichen Abmessungen erforderlich sind, wobei insbesondere das Adapterelement (49) in die jeweilige Zellenöffnung (6) einschraubbar, einsteckbar oder einrenkbar und gegebenenfalls mit einer Ringdichtung (21) versehen ist, welche einstückig mit dem Adapterelement (49) oder als an das Adapterelement (49) angespritzter Wulst ausgebildet ist.
